# EUROPEAN PATENT APPLICATION

(11) **EP 4 708 459 A1**
(43) Date of publication of application: **11.03.2026**
(21) Application number: 24898047.6
(22) Date of filing: 25.11.2024
(51) Int. Cl.: H01M 10/617, H01M 10/6556, H01M 10/655, H01M 10/625

(54) **BATTERY MODULE AND BATTERY PACK**

(30) Priority: 01.12.2023 KR 20230172604
(71) Applicant: LG Energy Solution, Ltd., Seoul 07335 (KR)
(72) Inventor: CHUNG, Won-Sik, Daejeon 34122 (KR); KIM, Young-Woong, Daejeon 34122 (KR); MUN, Ji-Seon, Daejeon 34122 (KR); UHM, Jae-Yong, Daejeon 34122 (KR); CHA, In-Seok, Daejeon 34122 (KR); PYUN, So-Young, Daejeon 34122 (KR); HWANG, Jae-Cheol, Daejeon 34122 (KR)
(74) Representative: Plasseraud IP
(86) International application number: PCT/KR2024/018721
(87) International publication number: WO 2025/116452

(57) **Abstract**

Disclosed is a battery module with improved cycle performance. The battery module according to one aspect of the present disclosure includes: a cell assembly including a plurality of battery cells stacked in at least one direction and respectively configured to provide an electrode terminal; a module case configured to accommodate the cell assembly in an inner space; a cooling member disposed at least on one side of the cell assembly and configured to discharge heat through a coolant; and a heat dissipation member disposed to face at least one battery cell and configured to transfer heat from the battery cell to the cooling member and partially protrude from a side of the cooling member.

## Description

### TECHNICAL FIELD

This application is based on and claims priority from Korean Patent Application No. 10-2023-0172604, filed on December 01, 2023, with the Korean Intellectual Property Office, the disclosure of which is incorporated herein in its entirety by reference.

The present disclosure relates to battery technology and, more specifically, to a battery module with improved cycle performance, and a battery pack and a vehicle including the same.

### BACKGROUND ART

As the demand for portable electronic products such as smartphones, tablet PCs, and smart watches increases significantly, and as electric vehicles become widespread, active research on batteries mounted to them, especially secondary batteries capable of being repeatedly charged and discharged, is underway.

Currently commercialized secondary batteries include nickel-cadmium batteries, nickel-hydrogen batteries, nickel-zinc batteries, lithium secondary batteries, and the like. Among of them, lithium secondary batteries are in the spotlight for their advantages of free charging and discharging due to almost no memory effect, a very low self-discharge rate, and a high energy density, compared to nickel-based secondary batteries.

These lithium secondary batteries use lithium-based oxides and carbon materials as positive and negative electrode active materials, respectively. The lithium secondary batteries include an electrode assembly in which positive and negative electrode plates, which are coated with the positive and negative electrode active materials, respectively, are disposed with a separator therebetween, and an exterior case, i.e., a battery case, that stores the electrode assembly with an electrolyte in a sealing manner.

In general, lithium secondary batteries may be classified, depending on the shape of the exterior case, into can-type secondary batteries in which the electrode assembly is stored in a metal can and pouch-type secondary batteries in which the electrode assembly is stored in a pouch of an aluminum laminate sheet. In addition, can-type secondary batteries may be classified into cylindrical batteries and prismatic batteries, depending on their shapes. Currently, secondary batteries, especially lithium secondary batteries, generally include three representative types of batteries, i.e., pouch-type batteries, prismatic batteries, and cylindrical batteries.

Secondary batteries are widely used in medium and large devices such as electric vehicles and energy storage systems (ESSs) for driving and storing energy, as well as in small devices such as portable electronic devices. In addition, the rapid growth of the electric vehicle-related industry is raising interest in batteries as a core technology thereof.

A plurality of secondary batteries described above may be electrically connected and stored inside a module case to form a battery module. In addition, one or more battery modules and various electronic components for controlling their charging and discharging operations, such as a BMS (Battery Management System) and fuses, may be included to form a battery pack.

Since the battery cells inevitably generate heat during the charging and discharging cycle, if the battery cell fails to be cooled, the performance of the battery cell and a battery device (battery module, etc.) including the same is unable to be stably secured. Furthermore, temperature may differ depending on the position even in a single battery cell. In addition, this temperature difference may cause a high-temperature concentration in a specific portion as the cycle accumulates.

In particular, this temperature unevenness may cause lithium plating on the internal electrode of the battery cell. This lithium plating phenomenon may lead to the growth of dendrites, which may cause damage to the separator or the like. In addition, if the separator is damaged, it may lead to thermal runaway of the battery, which may bring about major damage.

Moreover, with the recent trend of rapid charging technology, the user of high Crates is gradually increasing. This may accelerate heat generation from the battery, so it is urgent to develop technology capable of preventing high-temperature concentration and inducing uniform heat distribution.

### DISCLOSURE

### Technical Problem

The present disclosure is designed to solve the problems of the related art, and therefore the present disclosure is directed to providing a battery module that performs efficient heat management for local temperature difference, thereby effectively improving safety and cycle performance, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly including a plurality of battery cells stacked in at least one direction and respectively configured to provide an electrode terminal; a module case configured to accommodate the cell assembly in an inner space; a cooling member disposed at least on one side of the cell assembly and configured to discharge heat through a coolant; and a heat dissipation member disposed to face at least one battery cell and configured to transfer heat from the battery cell to the cooling member and partially protrude from a side of the cooling member.

Here, the heat dissipation member may include a main body disposed on the side of cooling member and a protrusion protruding from at least one side of the main body and having a narrower width than the main body.

In addition, the heat dissipation member may be configured to partially protrude at a high-temperature portion of the facing battery cell.

In addition, the heat dissipation member may be configured to protrude at a portion where the electrode terminal of the facing battery cell is located.

In addition, the heat dissipation member may be configured such that a width of the protruding portion at least partially varies.

In addition, the heat dissipation member may be configured to protrude at two or more portions.

In addition, the heat dissipation member may be configured to protrude at each of longitudinal both ends of the battery cell.

In addition, the heat dissipation member may be configured such that heat dissipation performance differs between two or more protruding portions.

In addition, the heat dissipation member may have an outer protrusion and an inner protrusion disposed in a longitudinal direction of the battery cell.

In addition, a plurality of heat dissipation members may be included to be disposed along a stacking direction of the battery cells.

In addition, at least some of the plurality of heat dissipation members may be configured to have different protrusion shapes from each other.

In addition, the heat dissipation member may be configured so that a notch is formed at an end where the cooling member is located.

In addition, the heat dissipation member may be configured to have a partial difference in a distance to the facing battery cell.

In addition, the heat dissipation member may be configured so that at least a portion of the protruding portion is bent.

According to another aspect of the present disclosure, there is provided a battery pack including a battery module according to the present disclosure.

According to another aspect of the present disclosure, there is provided a vehicle including a battery module according to the present disclosure.

### Advantageous Effects

According to the present disclosure, it is possible to improve the cycle performance of a battery device including a battery cell, i.e., a battery module or a battery pack.

In particular, according to one aspect of the present disclosure, the local temperature difference of the battery cell is able to be effectively reduced, thereby ensuring temperature uniformity for the battery cell. Therefore, the lithium plating phenomenon can be suppressed inside the battery cell, thereby preventing the growth of dendrites.

Therefore, according to this aspect of the present disclosure, it is possible to stably maintain the performance of the battery cell or the battery device including the same for a long period of time.

Furthermore, according to this aspect of the present disclosure, it is possible to suppress the occurrence of thermal runaway due to damage to the separator caused by the growth of dendrites. Therefore, the safety of the battery cell and the battery device can be secured.

Therefore, the present disclosure provides a battery device with an improved lifespan to be used safely and stably for a long period of time.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating the configuration of a battery module according to an embodiment of the present disclosure.
FIG. 2 is an exploded perspective view of the battery module in FIG. 1.
FIG. 3 is a cross-sectional view of a battery module according to an embodiment of the present disclosure.
FIG. 4 is a side view schematically illustrating the configuration of a heat dissipation member according to an embodiment of the present disclosure.
FIG. 5 is an exploded perspective view schematically illustrating a heat dissipation member and a battery cell in a battery module according to an embodiment of the present disclosure.
FIG. 6 is a side view schematically illustrating the configuration in which the heat dissipation member and the battery cell in FIG. 5 are stacked on each other.
FIGS. 7 to 9 are diagrams schematically illustrating the configuration of a heat dissipation member according to various other embodiments of the present disclosure.
FIG. 10 is a diagram schematically illustrating the configuration of a heat dissipation member according to another embodiment of the present disclosure.
FIG. 11 is a diagram illustrating the configuration of different heat dissipation members included in a battery module according to an embodiment of the present disclosure.
FIG. 12 is a diagram schematically illustrating the configuration of different heat dissipation members included in a battery module according to another embodiment of the present disclosure.
FIG. 13 is a diagram schematically illustrating the configuration of different heat dissipation members included in a battery module according to another embodiment of the present disclosure.
FIG. 14 is a diagram schematically illustrating the configuration of a heat dissipation member according to another embodiment of the present disclosure.
FIG. 15 is a diagram schematically illustrating the configuration of a heat dissipation member facing one battery cell according to an embodiment of the present disclosure.
FIG. 16 is an exploded perspective view schematically illustrating the configuration of a battery cell and a heat dissipation member included in a battery module according to another embodiment of the present disclosure.
FIG. 17 is a diagram schematically illustrating the configuration of a heat dissipation member according to another embodiment of the present disclosure.
FIG. 18 is a diagram schematically illustrating the configuration of a heat dissipation member according to another embodiment of the present disclosure.
FIG. 19 is a cross-sectional view schematically illustrating the configuration of a battery module according to another embodiment of the present disclosure.
FIG. 20 is a perspective view schematically illustrating the configuration of a battery pack according to an embodiment of the present disclosure.
FIG. 21 is a perspective view schematically illustrating the configuration of a battery pack according to another embodiment of the present disclosure.

### BEST MODE

Hereinafter, preferred embodiments of the present disclosure will be described in detail with reference to the accompanying diagrams. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, although terms indicating directions such as up, down, left, right, front, and back are used in this specification, it is obvious to those skilled in the art to which the present disclosure pertains that these terms are only for convenience of explanation with reference the relevant diagrams and may vary depending on the position, arrangement, or rotation of the target object or the position of the observer.

In addition, the present disclosure may include various embodiments. Redundant descriptions of substantially the same or similar configurations will be omitted from respective embodiments, and a description will be made based on differences therebetween.

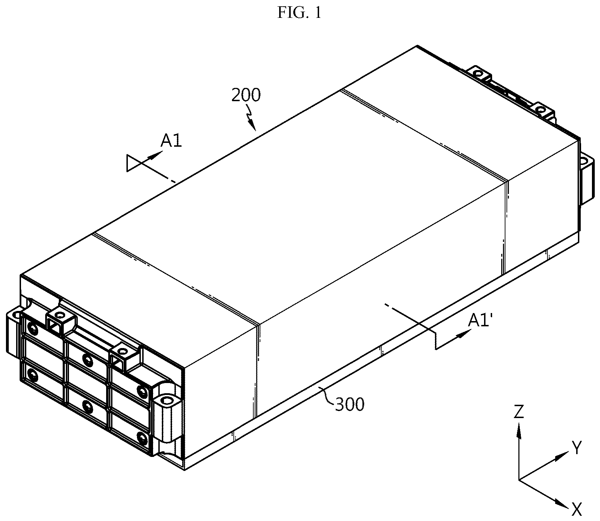

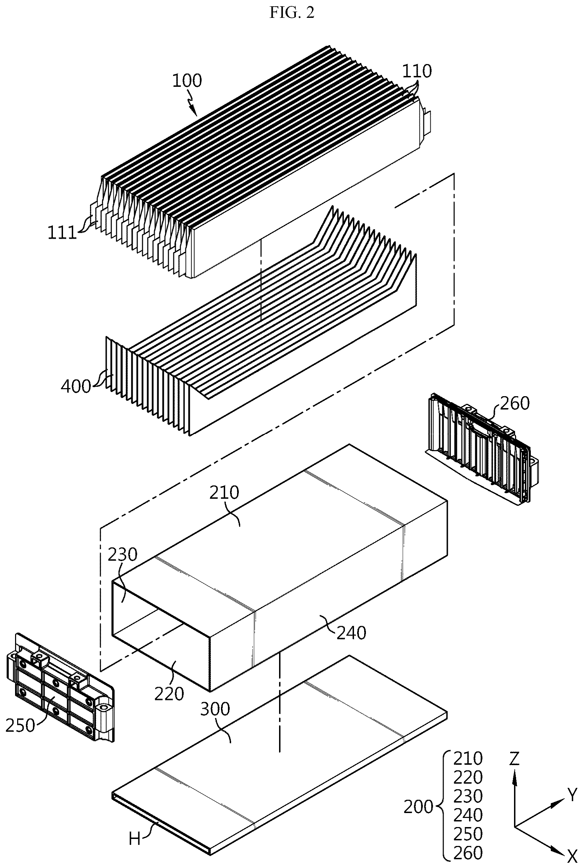

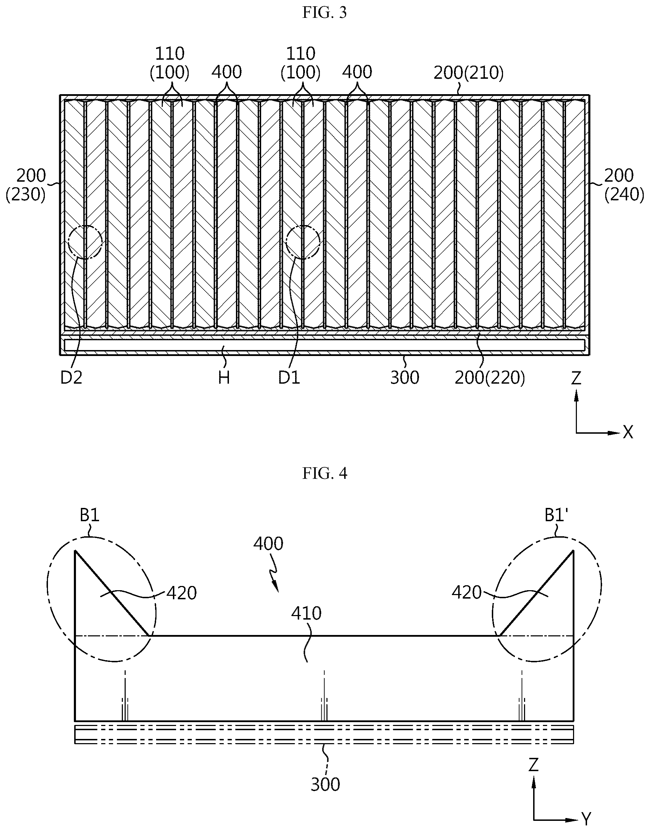

FIG. 1 is a perspective view schematically illustrating the configuration of a battery module according to an embodiment of the present disclosure, and FIG. 2 is an exploded perspective view of the battery module in FIG. 1. FIG. 3 is a cross-sectional view of a battery module according to an embodiment of the present disclosure. for example, FIG. 3 may be a cross-sectional view taken along line A1 - A1' in FIG. 1.

Referring to FIGS. 1 to 3, a battery module according to the present disclosure includes a cell assembly 100, a module case 200, a cooling member 300, and a heat dissipation member 400.

The cell assembly 100 may include one or more battery cells 110, in particular, a plurality of battery cells 110. Here, each battery cell 110 may indicate one secondary battery, or may indicate a battery group of multiple secondary batteries. In this specification, the description will be made based on the battery cell 110 indicating one secondary battery.

The battery cell 110 may include an electrode assembly, an electrolyte, and a battery case. In this case, the shape of the battery case may be configured in various ways, and the battery cells 110 may be classified into a pouch-type cell, a cylindrical cell, and a prismatic cell depending on the shape of the battery case. The types and shapes of these battery cells 110 are widely known at the time of filing the present disclosure, so a detailed description thereof will be omitted. The present disclosure may be applied to various types of secondary batteries known at the time of filing the present disclosure. In addition, the battery cell 110 may be a lithium secondary battery, or may be other types of secondary batteries.

In the cell assembly 100, the plurality of battery cells 110 may be configured to be stacked in at least one direction. For example, the plurality of battery cells 110 may be stacked to be arranged in a horizontal direction, in particular, in the left-right direction (X-axis direction), as shown in FIG. 2. In addition, the plurality of battery cells 110 provided in the cell assembly 100 may be electrically connected to each other in series and/or in parallel through a bus-bar (not shown) or the like.

Meanwhile, in this specification, unless otherwise specified, a description will be made on the assumption that the X-axis direction in which the plurality of battery cells 110 are stacked indicates the left-right direction, that the Y-axis direction, which is a horizontal direction orthogonal to the cell stacking direction, indicates the front-back direction, and that the Z-axis direction orthogonal to the X-Y plane indicates the up-down direction (vertical direction). Furthermore, the Y-axis direction may be referred to as a longitudinal direction of the cell in the case of a pouch-type cell. In addition, the left-right direction, the front-back direction, and the up-down direction may also be expressed as a first direction, a second direction, and a third direction, respectively.

Each battery cell 110 may have an electrode terminal 111. For example, as illustrated in FIG. 2, each pouch-type cell provided in the cell assembly 100 may have an electrode terminal 111 disposed to protrude in the front-back direction. This electrode terminal 111 may be referred to as an electrode lead or an electrode tab. A plurality of battery cells 110 may be electrically connected to each other in series or in parallel through the electrode terminals 111.

In addition, the battery module may further include a bus-bar or the like for facilitating connection between the plurality of electrode terminals 111 or sensing electrical signals from the electrode terminals 111.

The module case 200 may be configured to have an inner space formed therein and accommodate a plurality of cell assemblies 100 in the inner space. For example, the module case 200 may have an upper plate 210, a lower plate 220, a left plate 230, a right plate 240, a front plate 250, and a rear plate 260 to confine the inner space. In addition, the cell assembly 100 may be positioned in the confined inner space. The module case 200 may be at least partially made of metal and/or plastic materials.

At least some of the various plate members constituting the module case 200 may be configured in an integrated form. For example, the module case 200 may be manufactured in a mono-frame form in which the upper plate 210, the lower plate 220, the left plate 230, and the right plate 240 are integrated with each other, as shown in FIG. 2. In addition, the front plate 250 and the rear plate 260 may be coupled to the front and rear openings of the mono-frame.

As another example, the module case 200 may have a body in the form of a U-frame in which the lower plate 220, the left plate 230, and the right plate 240 are integrated with each other. In this case, the upper plate 210, the front plate 250, and the rear plate 260 may cover or close the top, front, and rear of the body. As another example, the module case 200 may be configured such that the respective plates are manufactured separately and then coupled to each other. In addition, the module case 200 may be configured in various other shapes or structures. Meanwhile, various fastening methods such as welding, bonding, bolting, and hooking may be used to fix and couple the unit components of the module case 200.

The cooling member 300 may be configured to dissipate heat through coolant. To this end, the cooling member 300 may be in direct or indirect contact with the coolant. In particular, the cooling member 300 may be configured to allow the coolant to flow. For example, as indicated by H in FIG. 2, the cooling member 300 may have a hollow formed therein to provide a cooling path. In addition, the coolant may flow through this cooling path H. Here, the coolant is a cooling medium capable of absorbing and transferring heat, and may include a cooling gas, as well as a cooling liquid such as cooling water.

Meanwhile, the cooling member 300 does not necessarily have to be configured such that the coolant flows therethrough. For example, the cooling member 300 may be implemented such that the coolant is held in a predetermined space. The cooling member 300 may be expressed in other terms, such as a heat sink, or may be implemented in other structures.

The cooling member 300 may be located on at least one side of the cell assembly 100. In addition, the cooling member 300 may absorb heat from the cell assembly 100. For example, as shown in FIGS. 1 to 3, the cooling member 300 may be disposed at the bottom of the cell assembly 100. Furthermore, if the cooling member 300 has a hollow so that the coolant flows therethrough, the coolant may absorb heat from the cell assembly 100 in the lower space of the cell assembly 100 and move to another space to transfer the absorbed heat to the outside.

The heat dissipation member 400 may be configured to transfer heat from the battery cell 110 provided in the cell assembly 100 to the cooling member 300. To this end, the heat dissipation member 400 may have a heat-conductive material, for example, a metal material such as aluminum, or may be made of such a material.

In addition, the heat dissipation member 400 may be disposed to face at least one battery cell 110. In particular, the heat dissipation member 400 may be configured in the form of a sheet or pad having two wide surfaces. In this case, the heat dissipation member 400 may be disposed so that at least one surface thereof faces the battery cell 110. For example, in the implemented configuration in FIG. 3, each heat dissipation member 400 may be disposed so that the battery cell 110 faces the left surface and/or the right surface.

In addition, the heat dissipation member 400 may be disposed so that at least one surface faces the cooling member 300. For example, referring to the implemented configuration in FIG. 3, the heat dissipation member 400 may be disposed so that the lower end thereof is directed to the cooling member 300. In this case, the lower end of the heat dissipation member 400 may be in direct or indirect contact with the cooling member 300. For example, in the implemented configuration in FIGS. 1 to 3, the lower end of the heat dissipation member 400 may be indirect contact with the cooling member 300 through the lower plate 220 of the module case 200.

The heat dissipation member 400 may absorb heat from the facing battery cell 110 and transfer the absorbed heat to the cooling member 300. In this case, a heat-conductive material such as a heat-conductive adhesive may be further interposed between the heat dissipation member 400 and the cooling member 300 in order to increase heat conduction efficiency and improve the assembling properties of the heat dissipation member 400. For example, in the implemented configuration in FIG. 3, a thermal resin may be interposed between the heat dissipation member 400 and the lower plate 220.

The heat dissipation member 400 may be configured to partially protrude. This will be described in more detail with reference to FIG. 4.

FIG. 4 is a side view schematically illustrating the configuration of a heat dissipation member 400 according to an embodiment of the present disclosure.

Referring to FIG. 4 as well, the heat dissipation member 400 may have partially protruding portions indicated by B1 and B1'. In particular, the heat dissipation member 400 may be configured to protrude in a predetermined direction from the cooling member 300. For example, when the cooling member 300 is positioned at the bottom, the heat dissipation member 400 may be configured to partially protrude from the bottom in a different direction, for example, in the upper direction. In addition, the partially protruding direction of the heat dissipation member 400 may be configured to be opposite to the direction in which the cooling member 300 is positioned. That is, the heat dissipation member 400 may include a portion protruding in the opposite direction to the side where the cooling member 300 is located.

According to this implemented configuration of the present disclosure, temperature distribution uniformity may be effectively attained inside one battery cell 110. Furthermore, in this case, the lithium plating phenomenon due to local temperature difference in the cell may be prevented from occurring. Therefore, the performance and safety of the battery module may be stably maintained for a long period of time, thereby improving the module cycle performance.

As shown in FIG. 4, the heat dissipation member 400 may have a main body 410 and a protrusion 420.

The main body 410 may be a portion of the heat dissipation member 400 located on the side of the cooling member 300. That is, the main body 410 may be disposed toward the cooling member 300. In particular, the main body 410 may be in direct or indirect contact with the cooling member 300. For example, referring to FIG. 4, the cooling member 300 may be positioned at the bottom of the heat dissipation member 400, and the main body 410 may be disposed so that the lower edge thereof comes into direct contact with the heat dissipation member 400 or comes into indirect contact with the heat dissipation member 400 through thermal resin or the like. The main body 410 may occupy an area of 50% or more of the heat dissipation member 400, but the present disclosure is not necessarily limited thereto.

The protrusion 420 may be configured to protrude from at least one side of the main body 410 to extend in a predetermined direction. For example, the protrusion 420 may be configured to protrude upward from the upper end of the main body 410, as shown in FIG. 4. In particular, the protrusion 420 may be a portion that is configured to partially protrude from the heat dissipation member 400, as indicated by B1 or B1' in FIG. 4. In addition, the protrusion 420 may have a narrower width than the main body 410. For example, in the implemented configuration in FIG. 4, the width (length) of the protrusion 420 in the left-right direction (Y-axis direction) may be formed to be less than the left-right width of the main body 410.

The heat dissipation member 400 may be configured such that the main body 410 and the protrusion 420 are integrated with each other. For example, the heat dissipation member 400 may be manufactured integrally as a single metal member. In particular, in the case where the heat dissipation member 400 is configured in a sheet form, the main body 410 and the protrusion 420 may be manufactured as a single sheet.

The main body 410 and the protrusion 420 may be configured so that their surfaces are positioned on the same plane. For example, if each of the main body 410 and the protrusion 420 is configured in a sheet form, the main body 410 and the protrusion 420 may be positioned on the same Y-Z plane.

According to the above-implemented configuration, selective heat absorption for a specific part of the battery cell 110 may be easily performed through the configuration of the protrusion 420. In addition, in this case, the heat absorbed by the protrusion 420 may move to the main body 410 and be quickly dissipated. Therefore, the temperature uniformity effect may be further improved by partial heat management of the battery cell 110.

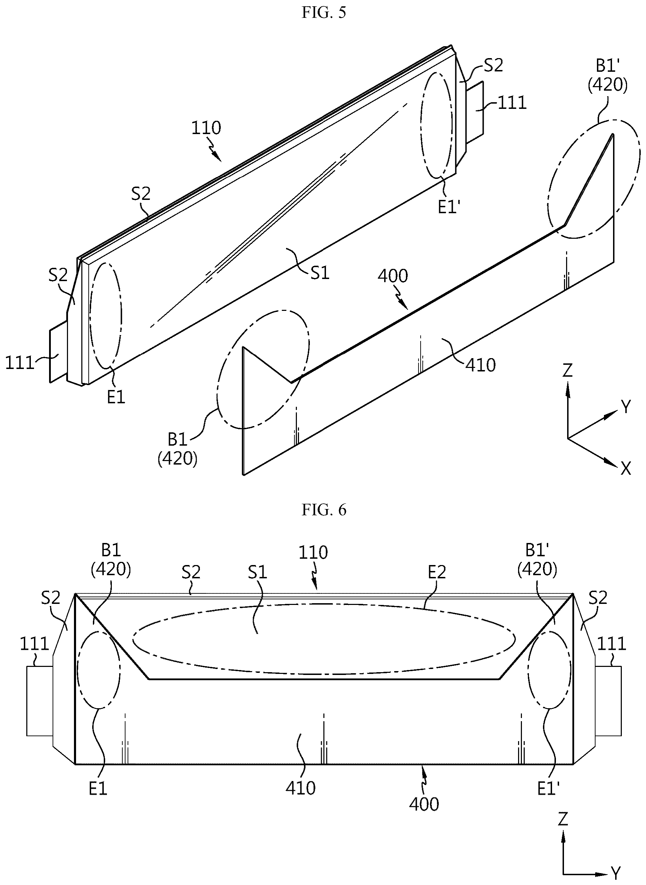

The heat dissipation member 400 may be configured to partially protrude at the high-temperature portion of the battery cell 110 that the heat dissipation member 400 faces. This will be described with reference to FIGS. 5 and 6.

FIG. 5 is an exploded perspective view schematically illustrating a heat dissipation member 400 and a battery cell 110 in a battery module according to an embodiment of the present disclosure. FIG. 6 is a side view schematically illustrating the configuration in which the heat dissipation member 400 and the battery cell 110 in FIG. 5 are stacked on each other.

Referring to FIG. 5, a heat dissipation member 400 may be configured to extend in the front-back direction (Y-axis direction) while standing in the up-down direction (Z-axis direction). In addition, a battery cell 110 may be configured to extend in the front-back direction while standing in the up-down direction so as to face the heat dissipation member 400. In this case, the heat dissipation member 400 and the battery cell 110 may be stacked so as to be in contact with each other in the left-right direction (X-axis direction).

In this implemented configuration, the battery cell 110 may have a high temperature on a specific portion during use (charging or discharging) or storage. For example, in the implemented configuration in FIG. 5, the battery cell 110 may have a higher temperature on the portions indicated by E1 and E1' than on other portions. In this case, the heat dissipation member 400 positioned to face the battery cell 110 may be configured such that the portion corresponding to the high-temperature portion protrudes. Here, the corresponding portion may be a portion where the battery cell 110 and the heat dissipation member 400 are stacked to face each other. For example, referring to the configuration illustrated in FIG. 6, in the state where the battery cell 110 and the heat dissipation member 400 are stacked on each other, the portions B1 and B1' of the heat dissipation member 400 corresponding to the portions E1 and E1' of the battery cell 110 may be configured to protrude upward, compared to other portions. In addition, the heat dissipation member 400 may be configured to protrude toward the high-temperature portion of the battery cell 110 that the heat dissipation member 400 faces.

In the above-implemented configuration, the high-temperature portion may indicate a portion of the battery cell 110 where the temperature is relatively high. For example, the high-temperature portion may be configured to have a specific temperature, for example, a temperature that is higher than the average temperature of the entire battery cell 110 or a room temperature by a certain degree or more. The high-temperature portion of the battery cell 110 may be identified in advance through a test, experiment, or calculation process during the design stage of the battery module. In addition, the heat dissipation member 400 may be configured to have a protrusion 420 in a portion corresponding to the high-temperature portion of the battery cell 110. In particular, the heat dissipation member 400 may be configured to protrude at the highest temperature portion of the battery cell 110 in a specific direction, for example, in the upper direction opposite to the cooling member 400.

According to this implemented configuration of the present disclosure, the heat may be quickly transferred from the high-temperature portion to the low-temperature portion through the heat dissipation member 400. In particular, in an implemented configuration, the heat dissipation member 400 may be configured to connect the highest temperature point and the lowest temperature point of the battery cell 110. In this case, the heat may be smoothly transferred from the high-temperature portion of the battery cell 110 to the low-temperature portion, which may be more advantageous in improving the cooling performance of the battery cell 110 and obtaining the effect of eliminating the partial temperature difference.

The heat dissipation member 400 may be configured to protrude at a portion corresponding to the portion where the electrode terminal 111 is located. For example, in the implemented configurations in FIGS. 5 and 6, the cooling member 300 may be located at the bottom, and the battery cell 110 may be configured to extend in the front-back direction (Y-axis direction) and have the electrode terminals 111 at both ends in the front-back direction. In this case, the heat dissipation member 400 may be configured to extend in the front-back direction so as to face the battery cell 110, and both ends in the front-back direction corresponding to the electrode terminals 111 of the battery cell 110 may protrude upward. In this implemented configuration, that the heat dissipation member 400 may be configured such that the both ends in the longitudinal direction (front-back direction) are higher than other portions.

During the charging and discharging process of the battery cell 110, a portion where the electrode terminal 111 is provided often has a higher temperature than other portions. However, in the above implemented configuration, the portion of the heat dissipation member 400 disposed closer to the electrode terminal 111 may be formed to be wider than other portions. That is, in the implemented configuration in FIG. 6, the area per unit length of the heat dissipation member 400 in the front-back direction (Y-axis direction) may be the maximum at the front end and the rear end, which face the electrode tab, compared to other portions.

According to this implemented configuration, the temperature of the high-temperature portion of the battery cell 110 where the electrode terminal 111 is provided may be quickly lowered. Therefore, the temperature of a specific portion of one battery cell 110, in particular, the portion near the electrode terminal 111, may be prevented from becoming excessively higher than other portions, thereby more effectively attaining temperature distribution uniformity of the battery cell 110.

The heat dissipation member 400 may be configured in a partially cut-off shape. For example, referring to FIGS. 5 and 6, the heat dissipation member 400 may be configured in the form of a substantially rectangular sheet with the upper central portion cut-off. In this case, when the heat dissipation member 400 is stacked on the battery cell 110, a portion of the battery cell 110 may be exposed, as indicated by E2 in FIG. 6. In particular, the cut-off portion of the heat dissipation member 400 may cause the upper central portion E2 of the battery cell 110 to be exposed in the left-right direction.

In this implemented configuration, the battery cell 110 may have a portion that is in contact with the heat dissipation member 400 and the portion E2 in FIG. 6 that is not in contact with the heat dissipation member 400. In particular, the cut-off portion of the heat dissipation member 400, that is, the non-contact portion, may be a portion having a relatively low temperature, instead of having the highest temperature in the battery cell 110. For example, the portion E2 of the battery cell 110 may have a lower temperature than the portion E1 in FIG. 6.

According to this implemented configuration, uniformity of heat distribution may be easily attained, compared to a rectangular heat dissipation sheet. In addition, in this case, the cut-off portion may reduce the weight of the heat dissipation member 400 and the battery module including the same, and secure space to improve the energy density of the battery module. In addition, in this case, the swelling space of the battery cell 110 may be secured by the cut-off portion.

The heat dissipation member 400 may be configured so that the width of the at least partially protruding portion varies. In particular, the heat dissipation member 400 may have a portion whose width is reduced along the protruding direction.

For example, referring to the portions B1 and B1' in FIGS. 5 and 6, the protrusion 420 of the heat dissipation member 400 may be configured so that the width gradually decreases along the upward direction. In particular, the protrusion 420 may be formed so that the end portion in the protruding direction has the minimum width. In this case, the protrusion 420 may be configured in the form of an approximately triangular sheet. On the other hand, the main body 410 may be configured in the form of an approximately rectangular sheet.

Furthermore, the protrusion 420 may be configured to have a width that decreases as it approaches the high-temperature portion. For example, the protrusion 420, as shown in FIG. 6, may be provided on a portion where the electrode terminal 111 of the battery cell 110 is located, and may be configured to protrude upward. In particular, one edge of the protrusion 420 may be formed in a vertical direction, and the other edge may be formed to be inclined at a predetermined angle with the vertical direction. For example, in the portion B1 in FIG. 4, the protrusion 420 has a front edge and a rear edge based on the upper vertex, and the front edge may extend in the vertical direction (Z-axis direction) and the rear edge may extend to be inclined at a predetermined angle (e.g., 30 degrees) with the vertical direction. In this case, the protrusion 420 may have a vertical edge (front edge) and an inclined edge (rear edge). In particular, the inclined edge may have an inclined shape so that the lower end is directed to the center of the main body 410 in the front-back direction (Y-axis direction). In addition, the vertical edge of the protrusion 420 may be configured to form a straight line with the front or rear edge of the main body 410.

According to this implemented configuration, the heat of the high-temperature portion absorbed by the protrusion 420 may be more smoothly transferred to the main body 410. In particular, in the profile of the protrusion 420, the width of the portion releasing heat may be formed to be greater than the portion absorbing heat. Therefore, the path of heat from the protrusion 420 toward the main body 410 may be increased, thereby enabling faster heat dissipation. In addition, according to the above-implemented configuration, the high-temperature portion where the electrode terminal 111 is located may be effectively cooled.

The heat dissipation member 400 may be configured so that two or more portions protrude therefrom. For example, as shown in FIGS. 4 to 6, each heat dissipation member 400 may have two protrusions 420. As another example, three or more protrusions 420 may be provided in each heat dissipation member 400.

Here, the plurality of protrusions 420 may be formed so that one ends thereof are connected to the main body 410 and the other ends protrude toward different portions from each other. For example, the two protrusions 420 illustrated in FIGS. 4 to 6 may be positioned at the upper portion of the main body 410 so as to extend upward while their lower ends are connected to the main body 410. In this case, the upper ends of the two protrusions 420 may be formed to be directed upward at the front and rear parts of the battery cell 110, respectively.

The plurality of protrusions 420 may be at least partially separated from each other. For example, as shown in FIGS. 4 to 6, two protrusions 420 may be disposed to be spaced apart from each other in the front-back direction (Y-axis direction). In this case, the two protrusions 420 do not come into contact with each other, and the lower ends thereof are connected to the same main body 410.

The above-implemented configuration may be more advantageous in the case where high-temperature portions are located in different parts in one battery cell 110. For example, one battery cell 110 may have a plurality of high-temperature portions spaced apart from each other, and the heat dissipation member 400 may have a plurality of protrusions 420 corresponding to the positions of the plurality of high-temperature portions, respectively. In this case, heat dissipation of the high-temperature portions of the battery cell 110 located in different parts may be selectively performed, thereby effectively eliminating the partial temperature difference of the battery cell 110.

Furthermore, the heat dissipation member 400 may be configured to have protrusions at both ends of the battery cell 110 in the longitudinal direction. For example, in the implemented configurations in FIGS. 4 to 6, the heat dissipation member 400 may be configured to extend in the front-back direction (Y-axis direction), and may have protrusions 420 provided at both ends in the front-back direction.

The battery cell 110, in particular, the pouch-type battery cell 110, may have electrode terminals 111 provided at both ends in the front-back direction. More specifically, referring to FIGS. 5 and 6, the pouch-type battery cell 110 may have a storage portion S1 for storing the electrode assembly and the electrolyte, and a sealing portion S2 at the edge thereof. In this case, the sealing portion S2 may be formed by heat-fusing the pouch-type case. Moreover, the sealing portions S2 may be formed on the front, rear, upper and/or lower edges of the storage portion S1. In particular, the pouch-type cell in the standing state may be configured in an approximately rectangular shape viewed from the left and right sides. In this case, a pouch-type cell having the sealing portions S2 formed at all four edges of the storage portion S1 is referred to as a four-sided sealing cell, and a pouch-type cell having the sealing portions S2 formed at three edges of the storage portion S1 is referred to as a three-sided sealing cell. However, the present disclosure is not limited to a specific shape or structure of the battery cell 110, especially the pouch-type cell, and various types of battery cells 110 known at the time of filing the present disclosure may be applied to the present disclosure.

As in the implemented configuration in FIG. 5 and FIG. 6, in the case where the battery cell 110 has electrode terminals 111 at both ends in the longitudinal direction, the heat dissipation member 400 may also be configured to protrude upward (in the +Z-axis direction) from both ends of the battery cell 110 in the longitudinal direction (front-back direction). Furthermore, the protrusion 420 may be configured to protrude upward and downward from both ends of the main body 410 in the front-back direction.

According to the implemented configuration of the present disclosure, it is possible to more effectively suppress temperature difference and secure cooling performance for a pouch-type battery cell 110 such as a bidirectional cell.

The heat dissipation member 400 may be configured so that two or more protrusions have different heat dissipation performances. The difference in heat dissipation performance between the protrusions may be implemented by configuring the protrusion shape, structure, thickness, or material differently. This will be described in more detail with reference to the drawings below.

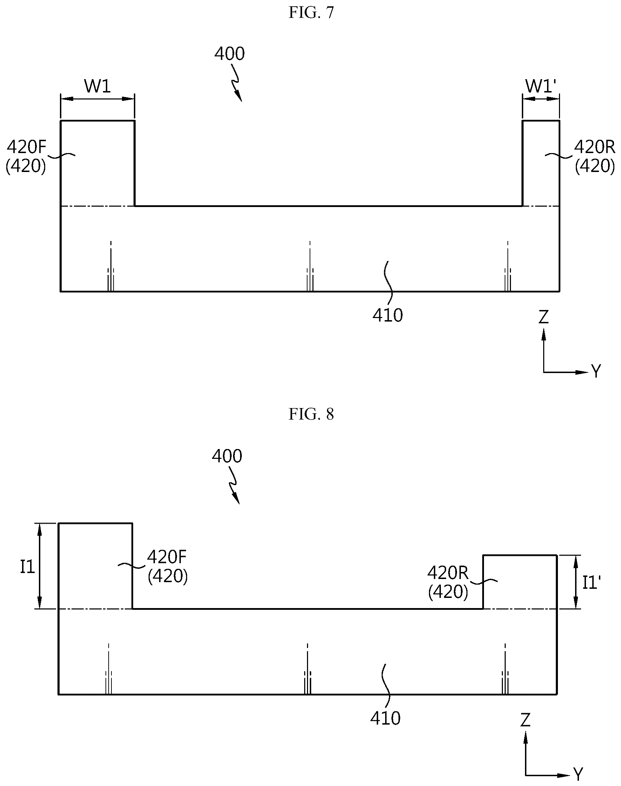

FIGS. 7 to 9 are diagrams schematically illustrating the configuration of a heat dissipation member 400 according to various other embodiments of the present disclosure.

Referring to FIGS. 7 to 9, the heat dissipation member 400 may have a main body 410 and two protrusions 420. In this case, the two protrusions 420 may be disposed on the front and rear sides of the main body 410, respectively, and may be divided into a front protrusion 420F and a rear protrusion 420R.

Referring to FIG. 7, the two protrusions 420F and 420R may have a rectangular shape and may be configured to have the same height in the up-down direction. However, the two protrusions 420F and 420R may be configured to have different lengths (widths) in the front-back direction. For example, as shown in FIG. 7, when the width of the front protrusion 420F is W1 and the width of the rear protrusion 420R is W1', W1 and W1' may be configured to be different from each other, so that the heat dissipation performance may differ between the two protrusions 420F and 420R.

In particular, in the above-implemented configuration, if the different protrusions 420F and 420R have the same height, the protrusion having a larger width may be better in heat dissipation performance. For example, in the implemented configuration in FIG. 7, since the width W1 of the front protrusion 420F is greater than the width W1' of the rear protrusion 420R, the heat dissipation performance of the front protrusion 420F may be higher than the heat dissipation performance of the rear protrusion 420R.

As another example, referring to FIG. 8, two protrusions 420F and 420R may have a rectangular shape and the same width. However, the two protrusions 420F and 420R may be configured to have different heights in the up-down direction. For example, as shown in FIG. 8, when the height of the front protrusion 420F is I1 and the height of the rear protrusion 420R is I1', I1 and I1' may be configured to be different from each other, so that the heat dissipation performance may differ between the two protrusions 420F and 420R.

In particular, in the above-implemented configuration, if the different protrusions 420F and 420R have the same width, the protrusion having a greater height may be better in the heat dissipation performance. For example, in the embodiment in FIG. 8, since the height I1 of the front protrusion 420F is greater than the height I1' of the rear protrusion 420R, the heat dissipation performance of the front protrusion 420F may be higher than the heat dissipation performance of the rear protrusion 420R.

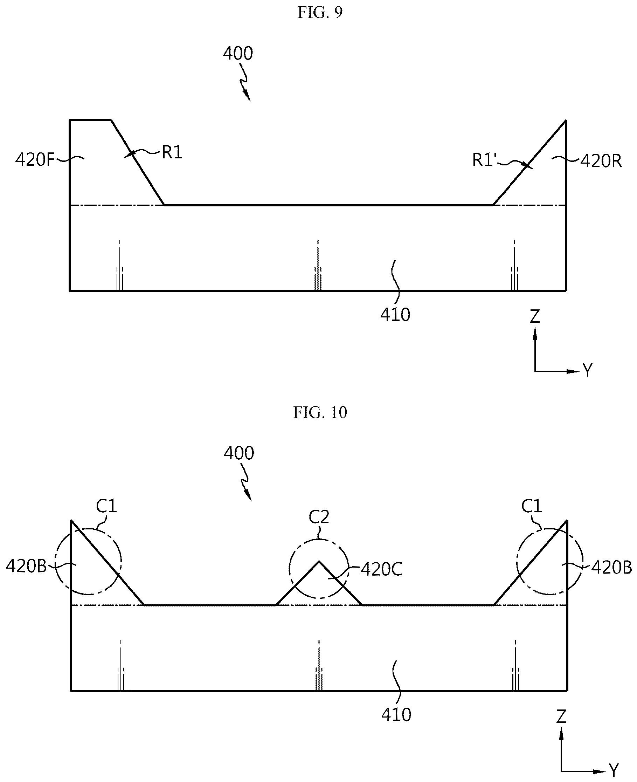

As another example, referring to FIG. 9, the two protrusions 420F and 420R may have different shapes, in addition to the height or width. For example, as shown in the diagram, the front protrusion 420F may be formed in a trapezoidal shape, and the rear protrusion 420R may be formed in a triangular shape. In this case, when the surface area of the front protrusion 420F is R1 and the surface area of the rear protrusion 420R is R1', R1 and R1' may be configured to be different from each other, so that the heat dissipation performance may differ between the two protrusions 420.

In particular, in the above-implemented configuration, the protrusion having a larger area may be better in the heat dissipation performance. For example, in the implemented configuration in FIG. 9, since the surface area R1 of the front protrusion 420F is greater than the surface area R1' of the rear protrusion 420R, the heat dissipation performance of the front protrusion 420F may be better than the heat dissipation performance of the rear protrusion 420R.

As another example, as shown in FIG. 4, the two protrusions 420 located on the front and the rear sides may be configured to have the same shape or area when viewed from the side. However, the two protrusions 420 may be configured to have different thicknesses when viewed from the front or rear side.

In particular, a thick protrusion may have higher heat dissipation performance than a thin protrusion. For example, in the implemented configuration in FIG. 4, the thickness of the front protrusion 420F located on the portion B1 may be formed to be greater than the thickness of the rear protrusion 420R located on the portion B1'. In this case, the front protrusion 420F may have a higher heat dissipation performance than the rear protrusion 420R.

Meanwhile, in FIGS. 7 to 9, the boundary between the main body 410 and the protrusion 420 is indicated by a dotted line for convenience of explanation. However, this is only an example, and the protrusion 420 and the main body 410 may not be clearly distinguished.

In a battery cell 110, high-temperature portions may be formed in several regions, and there may be a difference in temperature between the several high-temperature portions. In the above embodiment of the present disclosure, each heat dissipation member 400 may be configured to have different protrusions 420 exhibiting different heat dissipation performances from each other. Therefore, according to the above embodiment of the present disclosure, cooling may be properly performed on each portion for several high-temperature portions having a temperature difference. Therefore, it is possible to more effectively respond to a partial temperature difference in one battery cell 110.

For example, in the battery cell 110, the portion where the electrode terminal 111 is located may have a higher temperature than other portions. However, there may be a temperature difference between the electrode terminals 111. In particular, the negative electrode terminal portion may have a higher temperature than the positive electrode terminal portion in the battery cell 110. In this case, in the implemented configuration in FIGS. 7 to 9, the front protrusion 420F may be disposed on the negative electrode terminal portion and the rear protrusion 420R may be disposed on the positive electrode terminal portion, so that the heat dissipation performance of the protrusion 420 disposed on the negative electrode terminal portion may be higher than the heat dissipation performance of the protrusion 420 disposed on the positive electrode terminal portion. Therefore, the heat may be dissipated more quickly from the negative electrode terminal portion, which has a higher temperature, than from the positive electrode terminal portion, thereby contributing to reducing the temperature difference between the negative electrode terminal portion and the positive electrode terminal portion.

FIG. 10 is a diagram schematically illustrating the configuration of a heat dissipation member 400 according to another embodiment of the present disclosure.

As illustrated in FIG. 10, the heat dissipation member 400 may have an inner protrusion 420 and an outer protrusion 420 disposed in the longitudinal direction (Y-axis direction) of the battery cell 110. Here, the inner portion and outer portion represent relative positions, and a portion closer to the center of the battery cell 110 may be referred to as the inner portion, and a portion relatively far from the center of the battery cell 110 may be referred to as the outer portion. In the embodiment shown in FIG. 10, the protrusion 420 indicated by 420B may be the outer protrusion, and the protrusion 420 indicated by 420C may be the inner protrusion.

Two or more outer protrusions 420B and/or the inner protrusions 420C may be provided. For example, as illustrated in FIG. 10, two outer protrusions 420B may be included and positioned at both ends of the heat dissipation member 400 in the longitudinal direction. In this case, the inner protrusion 420C may be positioned between two outer protrusions 420B. Furthermore, the inner protrusion 420C may be disposed to be in contact with the center of the battery cell 110 in the longitudinal direction. In addition, the outer protrusion 420B and/or the inner protrusion 420C may be disposed to be spaced a predetermined distance apart from each other in the longitudinal direction of the battery cell 110.

The battery cell 110 disposed facing the heat dissipation member 400 may have high-temperature portions at both the inner portion and the outer portion in the longitudinal direction. In the above-implemented configuration, the outer protrusion 420B may perform heat dissipation of the outer high-temperature portion, and the inner protrusion 420C may perform heat dissipation of the inner high-temperature portion. For example, in the embodiment in FIG. 10, two outer protrusions 420B may cool the portions indicated by C1 and C1', and one inner protrusion 420C may cool the portion indicated by C2. Therefore, according to this implemented configuration, heat may be quickly and smoothly dissipated from the high-temperature portions disposed in various portions of the inner and outer sides of the battery cell 110 by the heat dissipation member 400.

In the above-implemented configuration, the outer protrusion 420B and the inner protrusion 420C may be configured to have different shapes or structures. In particular, the outer protrusion 420B and the inner protrusion 420C may be configured to have different heat dissipation performances.

For example, referring to the diagram shown in FIG. 10, the outer protrusion 420B and the inner protrusion 420C may be configured to have different degrees of protrusion. More specifically, the outer protrusion 420B may be configured to further protrude than the inner protrusion 420C. In particular, the outer protrusion 420B may have a larger heat dissipation area than the inner protrusion 420C. That is, the inner protrusion 420C may be configured to be smaller than the outer protrusion 420B.

According to this implemented configuration, if there is a temperature difference between the portion facing the outer protrusion 420B and the portion facing the inner protrusion 420C, the heat dissipation performance may be configured differently to appropriately respond to the temperature difference. For example, in the case of the pouch-type cell, the electrode terminals 111 are disposed close to the both ends indicated as C1 and C1', so that the both ends may have a higher temperature than the central portion indicated as C2. In this case, since the protruding area of the outer protrusion 420B is greater than that of the inner protrusion 420C, the high-temperature portion, especially the high-temperature portion near the electrode terminal 111, may be more effectively cooled. Therefore, the local temperature difference of the battery cell 110 may be more effectively addressed.

A plurality of heat dissipation members 400 may be included in the battery module. In addition, the plurality of heat dissipation members 400 may be disposed in parallel along the stacking direction of the battery cells 110. For example, referring to the embodiment illustrated in FIGS. 2 and 3, in the case where a plurality of battery cells 110 are stacked in the left-right direction (X-axis direction) in the cell assembly 100, the plurality of heat dissipation members 400 may also be stacked in parallel along the left-right direction.

In this case, the respective heat dissipation members 400 may be disposed to face different battery cells 110 from each other or to face different sides of the battery cells 110 from each other. Furthermore, at least some of the plurality of heat dissipation members 400 may be interposed between adjacent battery cells 110. In this case, the adjacent battery cells 110 where the heat dissipation member 400 is interposed may be spaced a predetermined distance apart from each other in order to accommodate the heat dissipation member 400. In addition, at least some of the plurality of heat dissipation members 400 may be disposed on the outer sides of the cell assembly 100. In particular, the heat dissipation members 400 may be stacked to face the outermost cell on the left and right sides of the cell assembly 100 having the battery cells 110 stacked in the left-right direction.

Meanwhile, although the heat dissipation member 400 is provided in each of the spaces between all adjacent cells in the implemented configuration illustrated in FIG. 3, the present disclosure is not necessarily limited thereto. For example, the heat dissipation member 400 may be interposed between cell groups each including multiple battery cells 110.

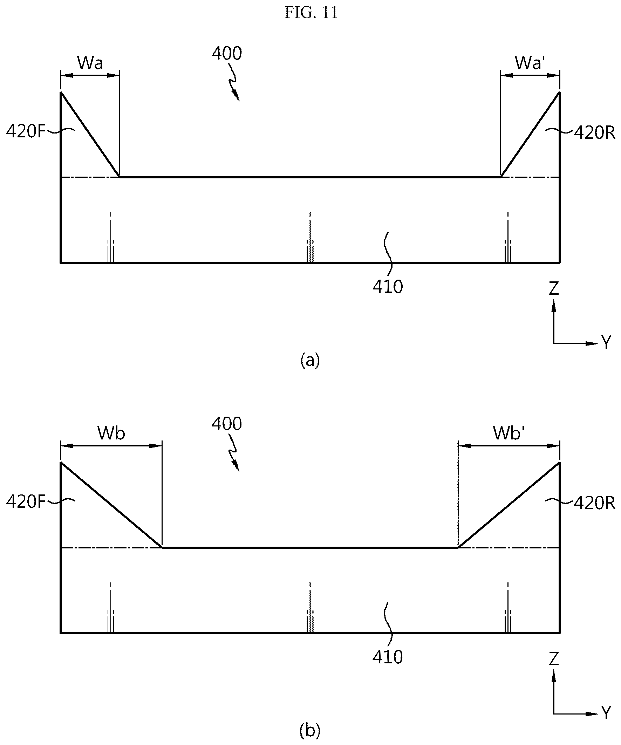

In the implemented configuration including a plurality of heat dissipation members 400 described above, at least some of the plurality of heat dissipation members 400 may be configured to have different protruding shapes. This will be described in more detail with reference to FIG. 11 or the like.

FIG. 11 is a diagram illustrating the configuration of different heat dissipation members 400 included in a battery module according to an embodiment of the present disclosure. That is, the battery module according to an embodiment of the present disclosure may include a plurality of heat dissipation members 400, and the plurality of heat dissipation members 400 may not have the same shape, and may include both a heat dissipation member 400 formed in the shape shown in (a) of FIG. 11 and a heat dissipation member 400 formed in the shape shown in (b) of FIG. 11.

In FIG. 11, when comparing the heat dissipation member 400 illustrated in (a) with the heat dissipation member 400 illustrated in (b), the heat dissipation member 400 illustrated in (b) has a wider protrusion 420 than the heat dissipation member 400 illustrated in (a). Specifically, in the heat dissipation member 400 illustrated in (a), the front protrusion 420F and the rear protrusion 420R may have widths as indicated by Wa and Wa', respectively. In addition, in the heat dissipation member 400 illustrated in (b), the front protrusion 420F and the rear protrusion 420R may have widths as indicated by Wb and Wb', respectively. In this case, the sizes of Wa, Wb, Wa', and Wb' may have the relationship of Wa<Wb and Wa'<Wb'. If the respective protrusions 420 have the same height, the heat dissipation member 400 of (b) may have a greater surface area than the heat dissipation member 400 of (a).

In this case, the heat dissipation member 400 of (b) may have a higher heat dissipation performance than the heat dissipation member 400 of (a). That is, in the above-implemented configuration, at least some of the plurality of heat dissipation members 400 may have different heat dissipation performances. In addition, the different heat dissipation members 400 may also provide differences in protrusion shapes or heat dissipation performances through the protruding height or thickness.

According to this implemented configuration, it is possible to more effectively respond to temperature differences occurring between corresponding battery cells 110. For example, in the embodiment illustrated in FIG. 3, a battery cell 110 located in the central portion indicated by D1 and a battery cell 110 located in the outer portion indicated by D2 may have differences in temperature or temperature distribution in the stacking direction of the cell assembly 100. For example, the battery cell 110 stacked relatively in the central portion indicated by D1 may have a higher temperature than the battery cell 110 stacked relatively in the outer portion indicated by D2. Therefore, a heat dissipation member 400 disposed in the central portion indicated by D1 may have a protrusion 420 having a larger area than a heat dissipation member 400 disposed in the outer portion indicated by D2. For example, the heat dissipation member 400 in FIG. 11(b) may be disposed in the portion D1 in FIG. 3, and the heat dissipation member 400 in FIG. 11(a) may be disposed in the portion D2 in FIG. 3.

According to this implemented configuration of the present disclosure, heat dissipation members 400 having a suitable shape may be provided for each of the multiple battery cells 110 included in the cell assembly 100. Therefore, it is possible to reduce the partial temperature difference of each battery cell 110 and effectively reduce the temperature difference between different battery cells 110.

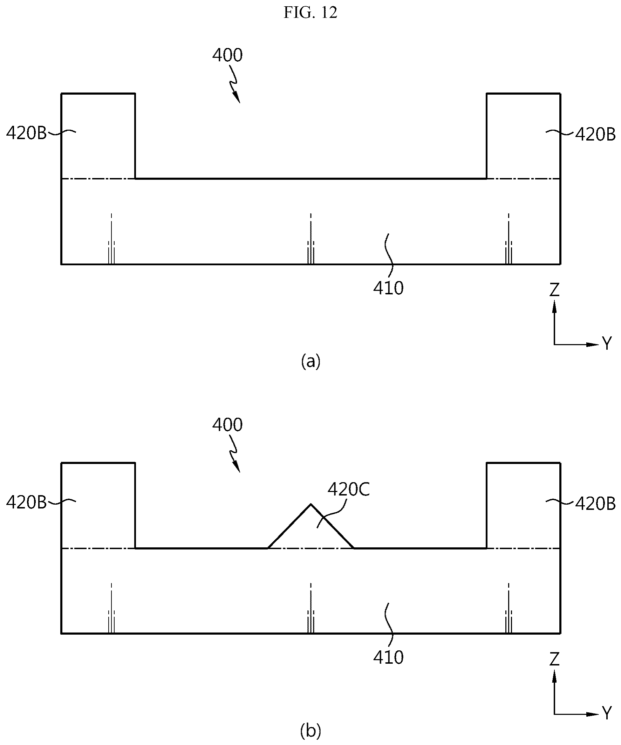

FIG. 12 is a diagram schematically illustrating the configuration of different heat dissipation members 400 included in a battery module according to another embodiment of the present disclosure.

Referring to FIG. 12, the battery module according to the present disclosure may include different types of heat dissipation members 400 as illustrated in (a) and (b). In particular, the heat dissipation member 400 of (b), unlike the heat dissipation member 400 of (a), may further include an inner protrusion 420C in addition to an outer protrusion 420B. As described in the embodiment in FIG. 10 above, the inner protrusion 420C may serve to absorb and dissipate heat more quickly and smoothly from the central portion of the corresponding battery cell 110.

In the case of a battery cell 110 stacked in the central portion of the cell assembly 100 indicated by D1 in FIG. 3, the central portion may have a higher temperature in the longitudinal direction (Y-axis direction), compared to the battery cell 110 stacked in the outer portion indicated by D2. Therefore, it may be preferable that the heat dissipation member 400 of FIG. 12(b) having the inner protrusion 420C is interposed between the battery cells 110 stacked in the central portion of the cell assembly 100 indicated by D1 in FIG. 3. On the other hand, it may be preferable that the heat dissipation member 400 of FIG. 12(a) not having the inner protrusion 420C is interposed between the battery cells 110 stacked in the outer portion of the cell assembly 100 indicated by D2 in FIG. 3.

According to this implemented configuration, a suitable heat dissipation member 400 may be provided in consideration of the stacked position of the battery cell 110. In particular, according to an implemented configuration, the temperature of the battery cell 110 stacked on the central portion may be prevented from excessively increasing. Therefore, temperature uniformity may be more advantageously attained throughout the cell assembly 100, as well as in each battery cell 110.

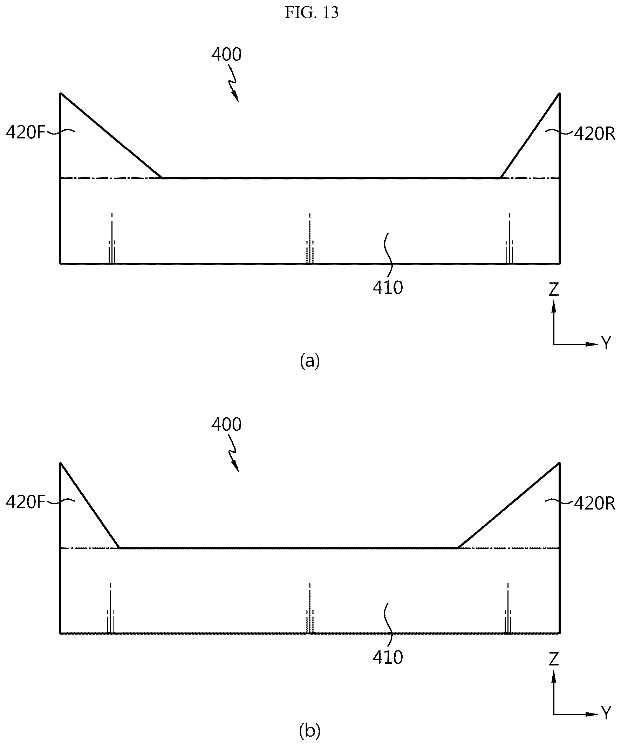

FIG. 13 is a diagram schematically illustrating the configuration of different heat dissipation members 400 included in a battery module according to another embodiment of the present disclosure.

Referring to FIG. 13, the battery module according to the present disclosure may include different types of heat dissipation members 400 illustrated in (a) and (b). Here, the heat dissipation member 400 of (a) may have a front protrusion 420F formed wider than a rear protrusion 420R, and the heat dissipation member 400 of (b) may have a rear protrusion 420R formed wider than a front protrusion 420F. That is, a plurality of heat dissipation members 400 included in one battery module may include a heat dissipation member 400 having a large front protrusion 420F and a heat dissipation member 400 having a large rear protrusion 420R.

In particular, in the case where a plurality of bidirectional battery cells 110, having the positive electrode terminal and the negative electrode terminal disposed on the opposite sides, are stacked, the arrangement of the positive electrode terminal and the negative electrode terminal may vary among different battery cells 110. For example, one group of battery cells 110 may be configured so that the positive electrode terminal is disposed on the front side, and another group of battery cells 110 may be configured so that the negative electrode terminal is disposed on the front side.

In this case, depending on the arrangement of the electrode terminals 111 of the facing battery cells 110, the heat dissipation member 400 in FIG. 13(a) may be disposed according thereto, or the heat dissipation member 400 in FIG. 13(b) may be disposed according thereto. For example, for a battery cell 110 in which the negative electrode terminal is disposed on the front side, the heat dissipation member 400 in FIG. 13(a) with a large front protrusion 420F may be disposed to face the same. On the other hand, for a battery cell 110 in which the negative electrode terminal is disposed on the rear side, the heat dissipation member 400 in FIG. 13(b) with a large rear protrusion 420R may be disposed to face the same. Furthermore, for a cell assembly 100 in which the position of the negative electrode terminal continuously changes between the front side and the rear side for a series connection between the battery cells 110, the heat dissipation member 400 with a large front protrusion 420F and the heat dissipation member 400 with a large rear protrusion 420R may be alternately stacked.

According to this implemented configuration, the temperature difference may be reduced more effectively even for the alternately stacked configuration of the battery cells 110 included in the cell assembly 100.

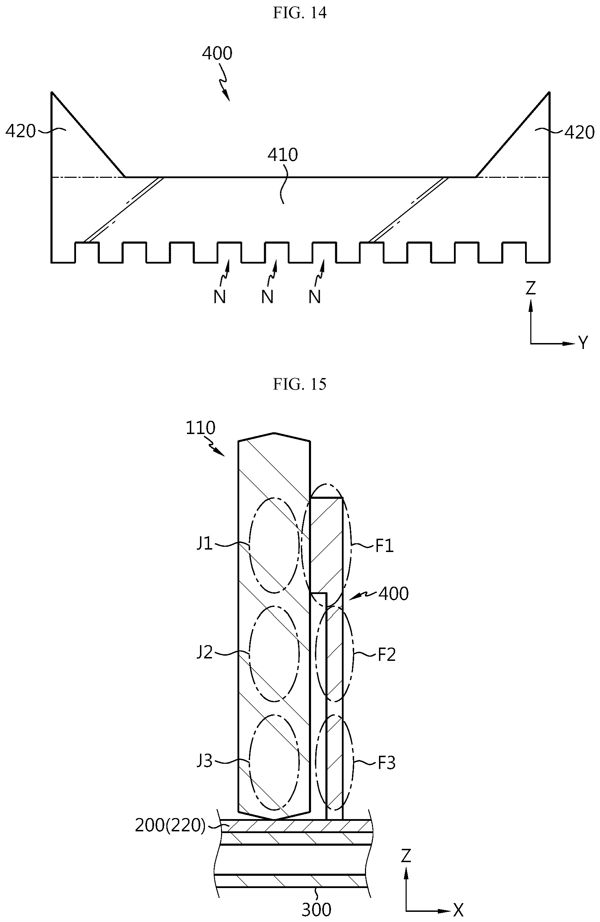

FIG. 14 is a diagram schematically illustrating the configuration of a heat dissipation member 400 according to another embodiment of the present disclosure.

Referring to FIG. 14, the heat dissipation member 400 may have a notch formed as indicated by N. In particular, the notch N may be formed at an end where the cooling member 300 is located. For example, when the cooling member 300 is located below the heat dissipation member 400, the notch N may be formed at the lower end of the heat dissipation member 400.

The notch N may be formed to be concave inward from the end. For example, as shown in FIG. 14, the notch N may be formed upward in a concave cut shape from the lower end of the heat dissipation member 400. Furthermore, a plurality of notches N may be formed along the end of the heat dissipation member 400. For example, as shown in FIG. 14, in the case where the heat dissipation member 400 is formed to extend in the front-back direction (Y-axis direction), multiple notches N may be disposed at the lower end of the heat dissipation member 400 in the front-back direction. In particular, the multiple notches N may be disposed to be spaced apart from each other. In this case, the notches N may cause the heat dissipation member 400 to have unevenness at the end.

The portion of the heat dissipation member 400 where the notches N are formed may come into direct or indirect contact with the cooling member 300. For example, a thermal resin may be interposed between the heat dissipation member 400 and the cooling member 300. In this case, the notch N of the heat dissipation member 400 may be in contact with the thermal resin. In particular, the notch N of the heat dissipation member 400 may be configured to be at least partially inserted into the thermal resin. Furthermore, the portion where the notches N of the heat dissipation member 400 are formed, i.e., the uneven portion, may be inserted into the thermal resin in a plate form, such as the main body 410 or the protrusion 420, as illustrated in FIG. 14.

According to this implemented configuration of the present disclosure, the heat transfer performance of the heat dissipation member 400 and the cooling member 300 may be increased. In addition, according to the above-implemented configuration, the assembling and fixing properties may be improved without increasing the volume or weight of the heat dissipation member 400.

The heat dissipation member 400 may be configured to have different distances to the facing battery cell 110. This will be described in more detail with reference to FIG. 15.

FIG. 15 is a diagram schematically illustrating the configuration of a heat dissipation member 400 facing one battery cell 110 according to an embodiment of the present disclosure.

Referring to FIG. 15, the battery cell 110 and the heat dissipation member 400 may be disposed to face each other in the horizontal direction (X-axis direction) while standing in the vertical direction (Z-axis direction). In this case, the heat dissipation member 400 may be configured to have partially different distances to the battery cell 110. More specifically, a portion indicated as F1 in the heat dissipation member 400 may be formed closer to the battery cell 110 than other portions of the heat dissipation member 400. That is, the horizontal distance between the portion F1 of the heat dissipation member 400 and the battery cell 110 may be shorter than the horizontal distance between the portions of the heat dissipation member 400 indicated as F2 or F3 and the battery cell 110. Here, the short distance may include a distance of 0, that is, the case where the battery cell 110 and the heat dissipation member 400 are in direct contact.

In particular, in the case where the heat dissipation member 400 has the main body 410 and the protrusion 420, the distance between at least a portion of the protrusion 420 and the battery cell 110 may be configured to be shorter than the distance between other portions of the protrusion 420 and the battery cell 110. For example, in the implemented configuration in FIG. 15, the portion indicated as F1 may be a portion belonging to the protrusion 420 and the portion indicated as F3 may be a portion belonging to the main body 410. In this case, the portion F1 corresponding to the protrusion 420 may be disposed closer to the battery cell 110 than the portion F3 corresponding to the main body 410.

In addition, the distance between the protrusion 420 and the battery cell 110 may vary among the portions. For example, both the portions F1 and F2 in FIG. 15 may belong to one protrusion 420 as indicated by B1 in FIG. 4. In this case, even in the same protrusion 420, the distance to the cell may differ between the portion indicated as F1 and the portion indicated as F2.

According to this implemented configuration, the heat may be transferred more quickly and smoothly from the high-temperature portion to the cooling member 300. For example, in the battery cell 110 illustrated in FIG. 15, the portion indicated as J1 may be a high-temperature portion, the portion indicated as J2 may be a middle temperature portion, and the portion indicated as J3 may be a low-temperature portion. In this case, the portion F1 of the heat dissipation member 400 is a portion facing the high-temperature portion J1 of the battery cell 110 and may directly absorb the heat from the high-temperature portion J1. In addition, the heat absorbed by the portion F1 described above may be transferred to the cooling member 300 via the portion F2 and the portion F3 of the heat dissipation member 400. In this case, when the heat passes from the high-temperature portion J1 through the portion F2 of the heat dissipation member 400, the distance between the heat dissipation member 400 and the battery cell 110 may be formed relatively long. Therefore, it is possible to suppress the heat from the middle temperature portion J2 together with the heat from the high-temperature portion J1 from accumulating in the portion F2 of the heat dissipation member 400. Therefore, the problem in which the dissipation performance of the heat from the high-temperature portion J1 is lowered due to the heat from the middle temperature portion J2 may be prevented or reduced.

Furthermore, the portion F1 of the heat dissipation member 400 facing the high-temperature portion J1 of the battery cell 110 may come into contact with each other, and the portion F2 of the heat dissipation member 400 facing the middle temperature portion J2 of the battery cell 110 may be separated by a predetermined distance. In this case, the heat absorption performance for the high-temperature portion J1 may be increased, and the insulation effect may be secured to some extent due to the separation space in the middle temperature portion J2. Therefore, when the heat moves from the high-temperature portion J1 of the battery cell 110 to the cooling member 300, the interference by the heat from the middle temperature portion J2 may be reduced.

In addition, in the heat dissipation member 400 with the above-implemented configuration, the heat absorption performance for the high-temperature portion J1 may be superior to the heat absorption performance for the medium temperature portion J2 and/or the low-temperature portion J3. Therefore, the temperature uniformity effect of the battery cell 110 by the heat dissipation member 400 may be further improved.

In the above-implemented configuration, the partial distance difference between the heat dissipation member 400 and the battery cell 110 may be implemented in various ways. For example, as illustrated in FIG. 15, by configuring the thickness of the heat dissipation member 400 to be partially different, a partial difference in the distance may be obtained between the heat dissipation member 400 and the battery cell 110. In this case, it may be expressed that a protrusion is formed on a specific portion of the heat dissipation member 400. As another example, a partial difference in the distance may be obtained between the heat dissipation member 400 and the battery cell 110 by attaching a heat conductor to a specific portion of the heat dissipation member 400. As another example, the heat dissipation member 400 may be disposed to be inclined at a predetermined angle (more than 0 degrees) with the vertical direction, instead of standing parallel to the battery cell 110. In this case, the distance between the heat dissipation member 400 and the battery cell 110 may partially vary depending on the inclined arrangement of the heat dissipation member 400. In this case, the heat dissipation member 400 may be configured to be inclined toward the battery cell 110 so that the high-temperature portion J1 is closer thereto than the low-temperature portion J3.

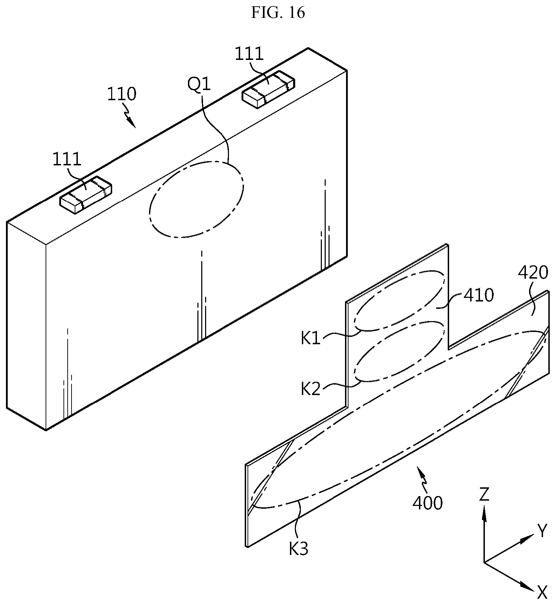

Meanwhile, although the pouch-type battery with the electrode terminals 111 protruding in both directions (forward and backward) has been illustrated and described in the previous embodiments, the battery module according to the present disclosure may include various other types of battery cells 110. This will be described in more detail with reference to FIG. 16.

FIG. 16 is an exploded perspective view schematically illustrating the configuration of a battery cell 110 and a heat dissipation member 400 included in a battery module according to another embodiment of the present disclosure.

Referring to FIG. 16, a cell assembly 100 may include a battery cell 110 including electrode terminals 111 provided on the same side. In particular, such a battery cell 110 may be a prismatic battery. For example, in the battery cell 110, two electrode terminals 111, i.e., both the positive electrode terminal and the negative electrode terminal, may be disposed on the upper side, as illustrated in the diagram. In this type of battery cell 110, the high-temperature portion may be positioned on the upper side, in particular, between two electrode terminals 111, as indicated by Q1.

In this case, if the cooling member 300 is located at the bottom of the battery cell 110, the heat dissipation member 400 may have the main body 410 located on the lower portion and the protrusion 420 located on the upper portion. In particular, the high-temperature portion of the battery cell 110 may be positioned as one area, as indicated by Q1, and the heat dissipation member 400 may be configured to protrude toward the portion indicated by Q1. In this case, one protrusion 420 may be formed in the heat dissipation member 400, and this protrusion 420 may be provided between two electrode terminals 111 in the longitudinal direction (Y-axis direction) of the battery cell 110, in particular, in the central portion. In addition, the protrusion 420 may be configured to protrude upward from the main body 410.

According to this implemented configuration, temperature difference reduction performance may be secured for the battery cell 110 in which the high-temperature portion is formed in one area. Furthermore, in the case where the positive electrode terminal and the negative electrode terminal are located on the same side as in the prismatic battery, the heat dissipation performance for the high-temperature portion may be improved by the heat dissipation member 400 having an appropriate protrusion according thereto.

In particular, in the implemented configuration in FIG. 16, the protrusion 420 may have a portion indicated by K1 and a portion indicated by K2. In this case, the portion K1 may be a portion facing the high-temperature portion Q1 of the battery cell 110. In addition, the portion indicated as K3 in FIG. 16 may be a portion corresponding to the main body 410. In this type of heat dissipation member 400, the portion K1 may directly absorb heat from the high-temperature portion Q1, and the portion K2 may transfer heat from the high-temperature portion Q1 to the portion K3. Then, the portion K3 of the heat dissipation member 400 may transfer heat to the cooling member 300.

The same configuration described in FIG. 15 may also be applied to the configuration in FIG. 16. That is, the description of the portions F1, F2, and F3 in FIG. 15 may be applied identically or similarly to the portions K1, K2, and K3 in FIG. 16.

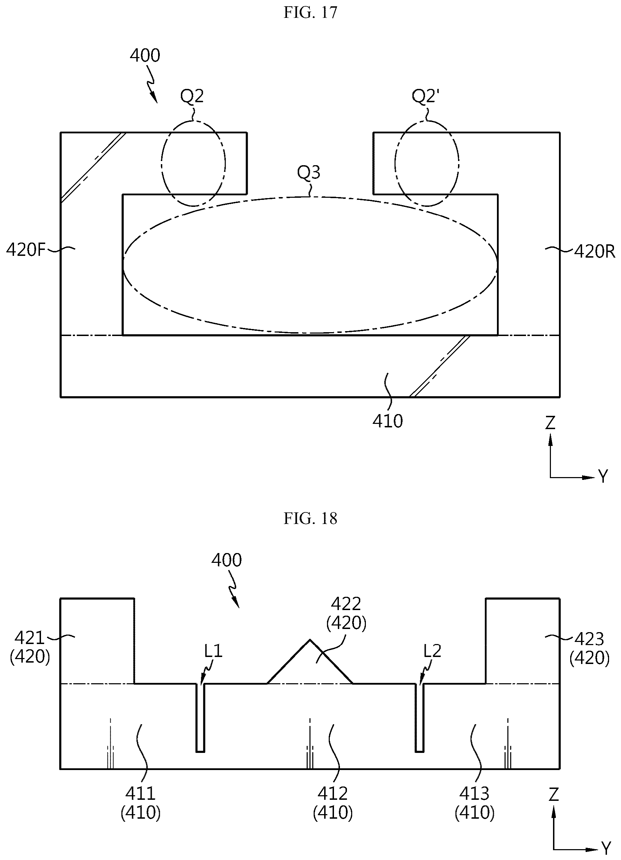

FIG. 17 is a diagram schematically illustrating the configuration of a heat dissipation member 400 according to another embodiment of the present disclosure.

Referring to FIG. 17, a heat dissipation member 400 may have a portion protruding toward the high-temperature portion and bending at least in part. More specifically, the high-temperature portion in the battery cell 110 may be located at the portions indicated by Q2 and Q2'. In this case, the heat dissipation member 400 may be configured such that the protrusion 420 protrudes from the main body 410 toward the high-temperature portions Q2 and Q2' and has a bent portion. In particular, in the implemented configuration in FIG. 17, the front protrusion 420F and the rear protrusion 420R may be configured to protrude upward from the front and rear ends of the main body 410, respectively, and bend in a predetermined direction. Furthermore, the front protrusion 420F may be configured to protrude upward and then bend at its upper end toward the rear (in the +Y-axis direction). In addition, the rear protrusion 420R may be configured to protrude upward and then bend at its upper end toward the front (in the -Y-axis direction).

According to the above-implemented configuration, the heat dissipation member 400 may more effectively transfer heat from the high-temperature portion of the battery cell 110 to the cooling member 300. In particular, in the case of the above-implemented configuration, the heat dissipation member 400 may be configured to avoid a specific portion of the battery cell 110 by the bent shape of the protrusion 420. For example, in the implemented configuration in FIG. 17, the portion indicated by Q3 may be a middle temperature portion. In this case, the heat dissipation member 400 may be configured so that the paths of heat absorbed from the high-temperature portions Q2 and Q2' do not pass through the middle temperature portion Q3 by the bent structure of the protrusion 420. In this case, the heat may be directly transferred from the high-temperature portions Q2 and Q2' to the cooling member 300 through the main body 410. Therefore, the heat dissipation efficiency for the high-temperature portion of the battery cell 110 may be further improved, which may be more advantageous in eliminating the local temperature difference of the battery cell 110 or the battery module.

FIG. 18 is a diagram schematically illustrating the configuration of a heat dissipation member 400 according to another embodiment of the present disclosure.

Referring to FIG. 18, a heat dissipation member 400 may include a main body 410 and a plurality of protrusions 420. In this case, the main body 410 may be configured to be at least partially divided into the areas corresponding to the plurality of protrusions 420.

For example, the heat dissipation member 400 may have a first protrusion 421, a second protrusion 422, and a third protrusion 423. In addition, the main body 410 may be disposed at the bottom of the multiple protrusions 420. In this case, the main body 410 may have slits formed to be concave inwardly at the portions where the respective protrusions 421, 422, and 423 are provided, as indicated by L1 and L2. These slits L1 and L2 may be configured to divide the main body 410 into unit areas corresponding to the respective protrusions 420.

More specifically, the main body 410 may have a first slit L1 formed downward from the upper edge of the connection portion between the first protrusion 421 and the second protrusion 422. In addition, a portion of the main body 410 may be divided into a first main body 411 and a second main body 412 by the first slit L1. In addition, the main body 410 may have a second slit L2 formed downward from the upper edge of the connection portion between the second protrusion 422 and the third protrusion 423. In addition, a portion of the main body 410 may be divided into a second main body 412 and a third main body 413 by the second slit L2. In this implemented configuration, the main body 410 may be divided into three unit areas by two slits L1 and L2 so as to correspond to three protrusions 420, respectively.

According to the above implemented configuration, since the respective main bodies 410 correspond to the plurality of protrusions 420, the heat dissipation performance of each protrusion 420 may be further improved. In particular, the heat absorbed by a specific protrusion 420 may be prevented from being hindered in movement by the heat absorbed by another protrusion 420, and may be transferred to the cooling member 300.

For example, in the implemented configuration in FIG. 18, the portion in contact with the first protrusion 421 may be a higher temperature portion than the portion in contact with the second protrusion 422. For example, the first protrusion 421 may be the outer protrusion 420B in the previous embodiment in FIG. 10, and the second protrusion 422 may be the inner protrusion 420C in the previous embodiment in FIG. 10. In this case, the heat absorbed by the first protrusion 421 may be directly transferred to the cooling member 300 located below through the first main body 411. In this case, the heat absorbed by the second protrusion 422 may not be properly transferred to the first main body 411 due to the first slit L1. Therefore, when the heat of the first protrusion 421 is transferred through the first main body 411, the heat of the second protrusion 422 may be prevented from accumulating to reduce the dissipation performance.

In the above-implemented configuration, the slits L1 and L2 may be configured not to completely separate the multiple main unit bodies 411, 412, and 413 from each other. For example, the slits L1 and L2 may extend downward from the upper end of the main body 410 but may not reach the lower end of the main body 410. In this case, since the first to third main bodies 411, 412, and 413 have a portion connecting them to each other, the assembling property, handling property, and structural stability of the heat dissipation member 400 may be secured to a certain level or higher.

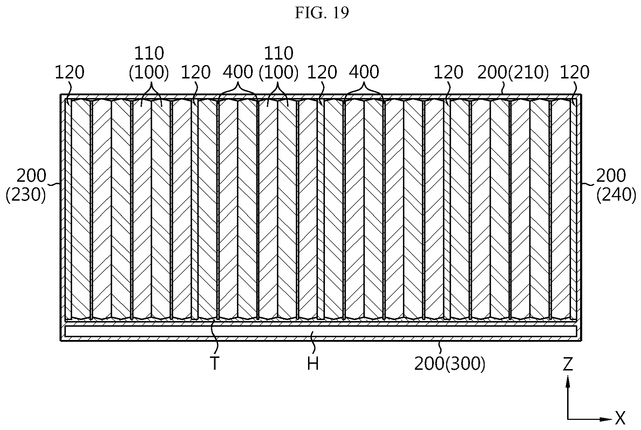

FIG. 19 is a cross-sectional view schematically illustrating the configuration of a battery module according to another embodiment of the present disclosure. For example, FIG. 19 may be a modification of the embodiment shown in FIG. 3.

Referring to FIG. 19, the cooling member 300 may be provided inside the module case 200. For example, a hollow may be formed in the lower plate 220 of the module case 200, so that coolant may flow through the hollow. In this case, the hollow formed in the module case 200 functions as a cooling path H.

In this implemented configuration, the cooling member 300 may be configured to be integrated into at least a portion of the module case 200. That is, the module case 200 may be configured so that a cooling function or cooling configuration is built in. In this implemented configuration, the heat dissipation member 400 may be in direct contact with the cooling member 300 or may be close thereto. For example, as illustrated in FIG. 19, when a thermal resin T is interposed between the heat dissipation member 400 and the cooling member 300, the heat of the heat dissipation member 400 may be directly transferred to the cooling member 300 through the thermal resin T. Therefore, in this case, the cooling performance or cell temperature uniformization performance by the heat dissipation member 400 may be further improved.

In addition, the cooling member 300 does not necessarily have to have the cooling path H in the form of a hollow illustrated in FIG. 3 or FIG. 19. For example, the cooling member 300 may be configured to expose a specific portion and dissipate heat through contact with the external air. In particular, in the battery module illustrated in FIG. 1, the present disclosure may be implemented even in a form excluding the cooling member 300. For example, if air comes into contact with the lower space of the module case 200, the heat transferred from the heat dissipation member 400 to the lower plate 220 of the module case 200 may be dissipated to the outside through the external air. In this case, the module case 200 and the cooling member 300 may be regarded as being integrated into one.

Referring to FIG. 19, the cell assembly 100 may further include a barrier 120 in addition to the battery cell 110. One or more barriers 120 may be provided in one cell assembly 100. Furthermore, the barrier 120 may be disposed between adjacent battery cells 110 in the cell assembly 100, or at the outermost part of the cell assembly 100 in the stacking direction. The barrier 120 may be configured in the form of a plate and may come into contact with the surface of the battery cell 110, in particular, the outer surface of the storage portion S1 of the pouch-type cell. Furthermore, the barrier 120 may be attached to the outer surface of the storage portion S1 of the pouch-type cell. Alternatively, the barrier 120 may be disposed to come into at least partial contact with the heat dissipation member 400.

The barrier 120 may be configured to absorb swelling of the battery cell 110. To this end, the barrier 120 may be provided with an elastic material such as urethane or rubber. In particular, the barrier 120 may absorb swelling of the central portion in the height direction (Z-axis direction) well for a plurality of stacked battery cells 110.

In addition, the barrier 120 may be configured to block heat and/or flame between adjacent battery cells 110 in the cell assembly 100. To this end, the barrier 120 may have a material such as silicon, mica, GFRP (Glass Fiber Reinforced Plastic), or CFRP (Carbon Fiber Reinforced Plastic).

In addition, the barrier 120 may be configured to perform various other functions and may include various other materials.

The heat dissipation member 400 may be attached to the surface of the battery cell 110 included in the cell assembly 100. To this end, the heat dissipation member 400 may have an adhesive material on the surface facing the battery cell 110. For example, the heat dissipation member 400 included in the portion D1 in FIG. 3 may have a double-sided adhesive tape provided on each of the left and right surfaces so as to be bonded and fixed to the battery cell 110.

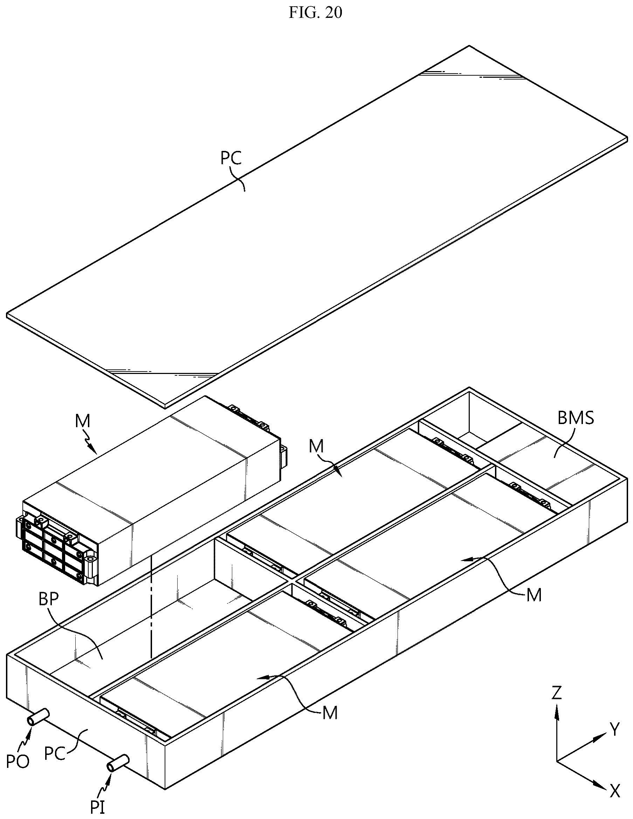

FIG. 20 is a perspective view schematically illustrating the configuration of a battery pack according to an embodiment of the present disclosure.

Referring to FIG. 20, a battery pack according to the present disclosure may include one or more battery modules according to the present disclosure, as indicated by M. In addition, the battery pack according to the present disclosure may further include various components in addition to the battery module M according to the present disclosure. For example, the battery pack according to the present disclosure may further include components of the battery pack known at the time of filing the present disclosure, such as a BMS (Battery Management System), a bus-bar, a relay, a current sensor, and the like.

In addition, the battery pack according to the present disclosure may further include a pack case indicated by PC in FIG. 20. This pack case PC may provide a space in which a battery module according to the present disclosure is stored. In particular, when a plurality of battery modules are included in the battery pack, the pack case PC may have spaces partitioned using cross-beams so as to store a plurality of battery modules.

In such a battery pack configuration, the pack case PC may function at least partially as a cooling member 300. In particular, a cooling path may be formed in at least a portion of the pack case PC for cooling one or more battery modules. For example, in the implemented configuration in FIG. 20, a cooling path H may be formed in the base plate BP of the pack case PC on which the battery module is mounted. In addition, a coolant inlet and outlet indicated by PI and PO may be provided in the pack case PC in order to input and output the coolant, such as cooling water, to and from the cooling path H of the base plate BP.

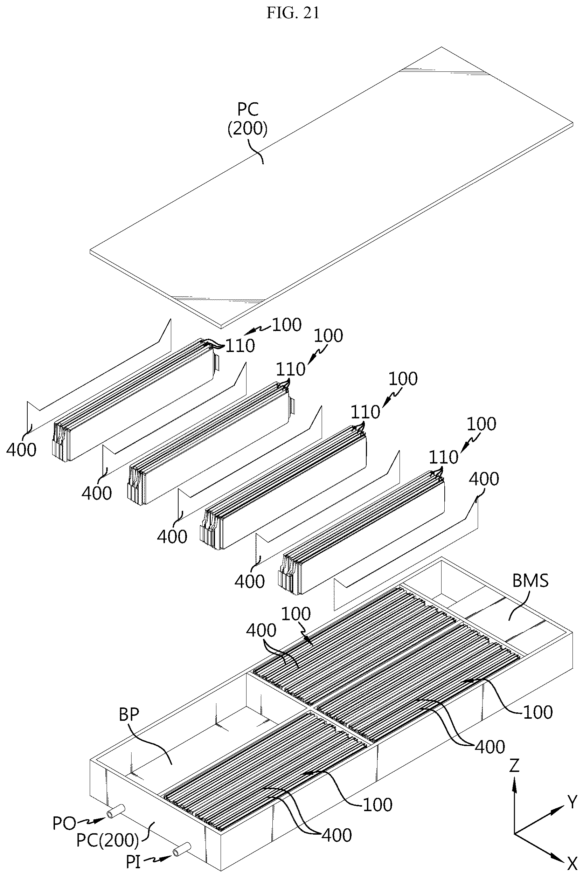

FIG. 21 is a perspective view schematically illustrating a configuration of a battery pack according to another embodiment of the present disclosure.

Referring to FIG. 21, the battery pack according to the present disclosure may include a battery module according to the present disclosure, and the module case 200 of the battery module functions as a pack case PC, instead of including a module case 200 and a pack case separately. In this case, components of the battery pack, such as a BMS, a bus-bar, and a relay, may be included inside the module case 200. This type of battery pack is also called a cell-to-pack (CTP) type in which the battery cell 110 is directly stored in the pack case PC. Recently, the development of the CTP-type of battery pack has also been activated, and the present disclosure may also be applied to such a CTP-type of battery pack.

In particular, the pack case PC as the module case 200 may include a cooling configuration described in the embodiment in FIG. 20 above. In this case, the heat dissipation members 400 disposed between a plurality of battery cells 110 may be in direct contact with the pack case PC and transfer the heat of the battery cells 110 to the outside through the coolant. For example, the lower ends of the plurality of battery cells 110 and the heat dissipation members 400 may be in contact with the base plate BP of the pack case PC with thermal resin interposed therebetween. In addition, a cooling path H may be formed in the base plate BP, so that the cooling water introduced through the inlet PI may flow through the cooling path and may then be discharged to the outside through the outlet PO. At this time, the heat of the heat dissipation member 400 may be quickly and smoothly transferred to the base plate BP of the pack case PC. According to this implemented configuration, the energy density of the battery pack may be improved while the heat transfer path is reduced, so that the temperature uniformity effect and cooling effect by the heat dissipation member 400 may be further improved.

The battery module or battery pack according to the present disclosure may be applied to a vehicle such as an electric vehicle or a hybrid vehicle. That is, the vehicle according to the present disclosure may include the battery module according to the present disclosure or the battery pack according to the present disclosure. In addition, the vehicle according to the present disclosure may further include various other components included in the vehicle, in addition to the battery module or battery pack. For example, the vehicle according to the present disclosure may further include a car body, a motor, a control device such as an ECU (electronic control unit), and the like, in addition to the battery module according to the present disclosure.

As described above, although the present disclosure has been described with reference to limited embodiments and diagrams, the present disclosure is not limited thereto, and various modifications and variations are possible inside the technical idea of the present disclosure and the scope of equivalence of the claims to be described below by those skilled in the art to which the present disclosure pertains.

### [Description of Reference numerals]

100: Cell assembly
110: Battery cell
111: Electrode terminal
120: Barrier
200: Module case
210: Top plate, 220: Bottom plate, 230: Left plate, 240: Right plate, 250: Front plate, 260: Back plate
300: Cooling member
400: Heat dissipation member
410: Main body
411: First main body, 412: Second main body, 413: Third main body
420: Protrusion
420F: Front protrusion, 420R: Rear protrusion
420B: Outer protrusion, 420C: Inner protrusion
421: First protrusion, 422: Second protrusion, 423: Third protrusion
H: Cooling path
N: Notch
T: Thermal resin
M: Battery module
PC: Pack case
BP: Base plate
PI: Inlet
PO: Outlet

## Claims

1. A battery module comprising:
a cell assembly comprising a plurality of battery cells stacked in at least one direction and respectively configured to provide an electrode terminal;
a module case configured to accommodate the cell assembly in an inner space;
a cooling member disposed at least on one side of the cell assembly and configured to discharge heat through a coolant; and
a heat dissipation member disposed to face at least one battery cell and configured to transfer heat from the battery cell to the cooling member and partially protrude from a side of the cooling member.

2. The battery module according to claim 1,
wherein the heat dissipation member comprises a main body disposed on the side of cooling member and a protrusion protruding from at least one side of the main body and having a narrower width than the main body.

3. The battery module according to claim 1,
wherein the heat dissipation member is configured to partially protrude at a high-temperature portion of the facing battery cell.

4. The battery module according to claim 1,
wherein the heat dissipation member is configured to protrude at a portion where the electrode terminal of the facing battery cell is located.

5. The battery module according to claim 1,
wherein the heat dissipation member is configured such that a width of the protruding portion at least partially varies.

6. The battery module according to claim 1,
wherein the heat dissipation member is configured to protrude at two or more portions.

7. The battery module according to claim 6,
wherein the heat dissipation member is configured to protrude at each of longitudinal both ends of the battery cell.

8. The battery module according to claim 6,
wherein the heat dissipation member is configured such that heat dissipation performance differs between two or more protruding portions.

9. The battery module according to claim 6,
wherein the heat dissipation member has an outer protrusion and an inner protrusion disposed in a longitudinal direction of the battery cell.

10. The battery module according to claim 1,
wherein a plurality of heat dissipation members are included to be disposed along a stacking direction of the battery cells.

11. The battery module according to claim 10,
wherein at least some of the plurality of heat dissipation members are configured to have different protrusion shapes from each other.

12. The battery module according to claim 1,
wherein the heat dissipation member is configured so that a notch is formed at an end where the cooling member is located.

13. The battery module according to claim 1,
wherein the heat dissipation member is configured to have a partial difference in a distance to the facing battery cell.

14. The battery module according to claim 1,
wherein the heat dissipation member is configured so that at least a portion of the protruding portion is bent.

15. A battery pack comprising a battery module according to any one of claims 1 to 14.

16. A vehicle comprising a battery module according to any one of claims 1 to 14.
